# EUROPÄISCHE PATENTSCHRIFT

(11) **EP 2 496 806 B1**
(45) Veröffentlichungstag und Bekanntmachung des Hinweises auf die Patenterteilung: **16.09.2015**
(21) Anmeldenummer: 10776589.3
(22) Anmeldetag: 04.11.2010
(51) Int. Cl.: F02B 37/02

(54) **Abgasturboladeranordnung mit ROHRANORDNUNG**
Exhaust turbocharger arrangement with PIPE ARRANGEMENT
Turbocompresseur avec ENSEMBLE TUBULAIRE

(30) Priorität: 06.11.2009 DE 102009052167
(43) Veröffentlichungstag der Anmeldung: 12.09.2012
(73) Patentinhaber: MTU Friedrichshafen GmbH, 88045 Friedrichshafen (DE)
(72) Erfinder: GUNKEL, Rolf, 88048 Friedrichshafen (DE); REITZ, Jörg Andre, 88682 Salem (DE)
(74) Vertreter: Schimek, Wolfgang Stefan
(86) Internationale Anmeldenummer: PCT/EP2010/006718
(87) Internationale Veröffentlichungsnummer: WO 2011/054512

(56) Entgegenhaltungen:
- EP-A1- 1 679 429
- EP-A1- 1 801 362
- EP-A2- 1 270 890
- EP-A2- 2 045 454
- FR-A1- 2 849 470
- FR-A3- 2 925 113
- GB-A- 2 060 066

## Beschreibung

Die vorliegende Erfindung betrifft eine Abgasturboladeranordnung gemäß dem Oberbegriff von Anspruch 1.

Auf dem Gebiet der Brennkraftmaschinen, insbesondere der Dieselmotoren, sind auch solche mit zweistufiger Aufladung durch einen ersten und einen zweiten Turbolader bekannt. Die Turbolader sind z.B. Abgasturbolader, können jedoch auch mechanische Lader sein. Bei einer zweistufigen Aufladung werden z.B. ein Hochdrucklader und ein Niederdrucklader in Reihe geschaltet, wobei z.B. der Abgasstrom zunächst den Hochdrucklader und anschließend den Niederdrucklader durchströmt bzw. antreibt. Um eine starre, starker mechanischer und thermischer Beanspruchung ausgesetzte Verbindung zwischen den Turboladern bzw. den Turbinengehäusen einer solchen Anordnung zu vermeiden, wurde im Stand der Technik vorgeschlagen, eine den Abgasstrom führende Verbindung mittels zweier V-Bandschellen und einem Kompensator bzw. einem Längenausgleichselement zu schaffen. Die bekannten Anordnungen sowie die Anbindung der Abgasturbolader an die Brennkraftmaschine sind jedoch nach wie vor thermisch und mechanisch zu stark beansprucht und benötigen erheblichen Bauraum.

Ausgehend hiervon liegt der vorliegenden Erfindung die Aufgabe zugrunde, eine Rohranordnung vorzuschlagen, welche oben genannte Nachteile überwindet und durch welche ein erster und ein zweiter Turbolader im begrenzten Bauraum mit geringer mechanischer und thermischer Belastung miteinander verbunden angeordnet werden kann.

Diese Aufgabe wird erfindungsgemäß durch die Merkmale des Anspruchs 1 gelöst.

Erfindungsgemäß wird eine Rohranordnung mit einem Rohrelement vorgeschlagen, wobei das Rohrelement zur Verbindung, insbesondere zur strömungsmäßigen Verbindung, eines Turbinenauslasses mit einem Turbineneinlass je eines Abgasturboladers vorgesehen ist, wobei ein erster Rohrabschnitt des Rohrelements eine erste Befestigungsvorrichtung zur Befestigung eines ersten Abgasturboladers sowie eine zweite Befestigungsvorrichtung zur Befestigung des Rohrelements an einem ersten Tragelement einer Brennkraftmaschine aufweist, und wobei ein zweiter Rohrabschnitt eine dritte Befestigungsvorrichtung zur Befestigung eines zweiten Abgasturboladers sowie eine vierte Befestigungsvorrichtung zur Befestigung des Rohrelements an einem zweiten Tragelement einer Brennkraftmaschine aufweist.

Gemäß einem Aspekt der Erfindung weist die Rohranordnung ein mehrteiliges Rohrelement auf.

Bei einer erfindungsgemäßen Ausführungsform der Rohranordnung ist ein erstes Ende der Rohranordnung an dem ersten Rohrabschnitt gebildet und ein zweites Ende der Rohranordnung an dem zweiten Rohrabschnitt gebildet.

Weiterhin ist erfindungsgemäß eine Rohranordnung vorgesehen, bei welcher der erste Rohrabschnitt und der zweite Rohrabschnitt als getrennte bzw. eigenständige Rohrabschnitte, insbesondere nicht integral, gebildet sind.

Bei einer weiteren erfindungsgemäßen Ausführungsform der Rohranordnung weist das Rohrelement ein Ausgleichselement und/oder ein Verbindungselement auf.

Bei noch einer weiteren erfindungsgemäßen Ausführungsform der Rohranordnung ist das Rohrelement aus einem ersten Rohrabschnitt, einem Ausgleichselement sowie einem zweiten Rohrabschnitt gebildet.

Weiterhin wird erfindungsgemäß eine Rohranordnung vorgeschlagen, wobei eine Befestigungsvorrichtung eines Rohrelements als Flanschelement gebildet ist bzw. ein Flanschelement aufweist.

Des Weiteren sind bei einer erfindungsgemäßen Rohranordnung die erste und die zweite Befestigungsvorrichtung und/oder die dritte und die vierte Befestigungsvorrichtung jeweils als gemeinsame Befestigungsvorrichtung für sowohl einen Abgasturbolader als auch für ein Tragelement ausgebildet.

Bei einer erfindungsgemäßen Ausführungsform der Rohranordnung erstreckt sich eine Befestigungsvorrichtung über einen Durchmesser des Rohrelements hinaus.

Vorgeschlagen wird erfindungsgemäß auch eine Brennkraftmaschine mit einem ersten und einem zweiten Abgasturbolader, wobei die Brennkraftmaschine eine erfindungsgemäße Rohranordnung aufweist, wobei durch die Rohranordnung ein Abgasstrom von einem Turbinenauslass des ersten Abgasturboladers zu einem Turbineneinlass des zweiten Abgasturboladers führbar ist, wobei mittels der ersten Befestigungsvorrichtung der erste Abgasturbolader und mittels der dritten Befestigungsvorrichtung der zweite Abgasturbolader an der Rohranordnung angeordnet ist, und wobei die Rohranordnung mittels der zweiten und der vierten Befestigungsvorrichtung an der Brennkraftmaschine angeordnet ist.

Bei einer erfindungsgemäßen Ausführungsform der Brennkraftmaschine sind der erste und der zweite Abgasturbolader durch die Rohranordnung getragen an der Brennkraftmaschine befestigt.

Bei noch einer erfindungsgemäßen Ausführungsform der Brennkraftmaschine ist die tragende Befestigung mittels der Rohranordnung die einzige tragende Befestigung der ersten und zweiten Abgasturbolader an der Brennkraftmaschine.

Weiterhin ist erfindungsgemäß eine Brennkraftmaschine vorgesehen, wobei der erste Rohrabschnitt des Rohrelements der Rohranordnung mit einem ersten Tragelement verbunden ist und der zweite Rohrabschnitt des Rohrelements mit einem zweiten Tragelement verbunden ist.

Gemäß einer erfindungsgemäßen Ausführungsform einer Brennkraftmaschine ist das erste Tragelement mit einem Zylinderkopfelement der Brennkraftmaschine verbunden und/oder das zweite Tragelement mit einem Kurbelgehäuse der Brennkraftmaschine verbunden.

Vorgeschlagen wird erfindungsgemäß ein Verfahren zur Herstellung einer erfindungsgemäßen Brennkraftmaschine, wobei in einem ersten Schritt eine erfindungsgemäße Rohranordnung an einem ersten und einem zweiten Tragelement der Brennkraftmaschine angeordnet wird, und in einem zweiten Schritt ein erster und ein zweiter Abgasturbolader strömungsmäßig mit der Rohranordnung verbunden an der Rohranordnung tragend befestigt werden.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
Fig. 1 exemplarisch eine Rohranordnung gemäß einer möglichen Ausführungsform der Erfindung;
Fig. 2 exemplarisch die Rohranordnung von Fig. 1 teilweise zerlegt;
Fig. 3 exemplarisch die Rohranordnung von Fig. 1 bei Anordnung zwischen einem ersten und einem zweiten Turbinengehäuse je eines Abgasturboladers; und
Fig. 4 exemplarisch die Rohranordnung von Fig. 1 bei Anordnung zwischen einem ersten und einem zweiten Abgasturbolader; und
Fig. 5 exemplarisch die Rohranordnung von Fig. 1 bei Anordnung an einem ersten und einem zweiten Tragelement.

In der nachfolgenden Beschreibung und den Zeichnungen entsprechen gleichen Bezugszeichen Elemente gleicher oder vergleichbarer Funktion.

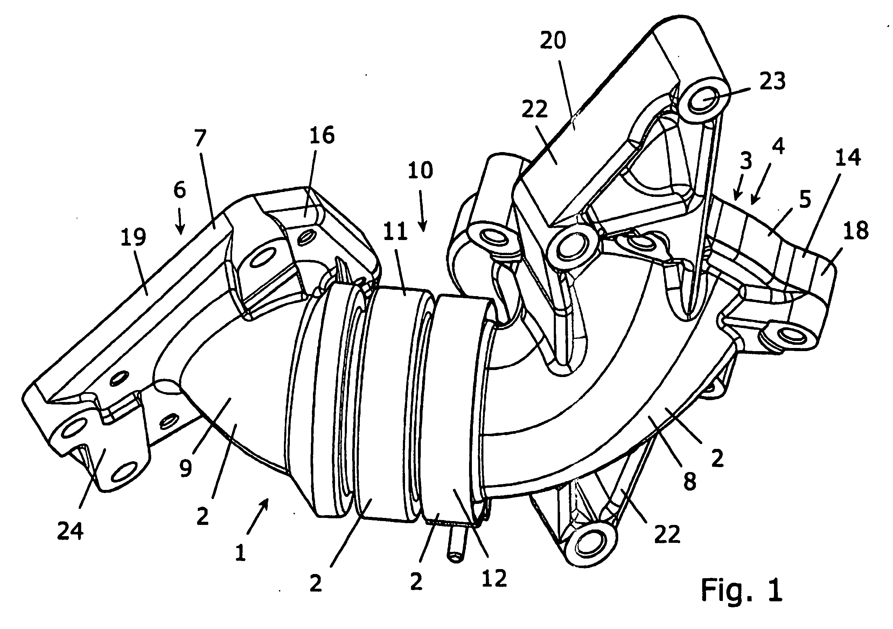

Fig. 1 zeigt eine erfindungsgemäße Rohranordnung 1, welche zur Verbindung zweier Abgasturbolader dient, insbesondere dazu dient, einen Turbineneinlass eines Abgasturboladers mit einem Turbinenauslass eines weiteren Abgasturboladers zu verbinden, d.h. strömungsmäßig zu verbinden. Die Turbolader sind dabei zum Beispiel zur Realisierung einer bekannten zweistufigen Aufladung vorgesehen und zu diesem Zweck z.B. in Reihe angeordnet, z.B. ein Hochdrucklader in Strömungsrichtung vor einem Niederdrucklader. Bei Betrieb einer Brennkraftmaschine durchströmt der Abgasstrom zunächst z.B. den Hochdrucklader, tritt an dessen Turbinenauslass aus, durchströmt die Rohranordnung 1 bis zum Turbineneinlass des Niederdruckladers, um in der Folge diesen zu durchströmen bzw. anzutreiben. Dabei ist denkbar, dass ein Teil des Abgasstroms an einem der Abgasturbolader, z.B. an dem Hochdrucklader, abgeleitet bzw. vorbeigeleitet wird, z.B. mittels eines im Stand der Technik bekannten Waste Gates bzw. Bypassventils.

Die Rohranordnung 1 weist, z.B. zur Führung eines Abgasstroms, ein Rohrelement 2 mit einem Innenhohlraum 3 auf, welches als z.B. Hohlrohr gebildet ist. Der Innenhohlraum 3 verbindet zum Beispiel eine erste Öffnung 4 an einem ersten Rohrende 5 mit einer zweiten Öffnung 6 an einem zweiten Rohrende 7 und bildet insofern einen Kanal zwischen den Öffnungen 4,6, in welchem ein Abgasstrom strömen bzw. geführt werden kann. Beispielsweise ist die erste Öffnung 4 als Eintrittsöffnung für einen vom ersten Abgasturbolader bzw. dessen Turbinenauslass ausgehenden Abgasstrom vorgesehen, die zweite Öffnung als Austrittsöffnung, welche den Abgasstrom an den Einlass des zweiten Abgasturboladers, i.e. dessen Turbineneinlass führt. Das Rohrelement 1 ist insofern zur strömungsmäßigen Verbindung des ersten und zweiten Abgasturboladers vorgesehen.

Das Rohrelement 2 weist einen ersten Rohrabschnitt 8 auf, welcher z.B. das erste Ende 5 des Rohrelements 2 ausbildet. Ferner weist das Rohrelement 2 einen zweiten Rohrabschnitt 9 auf, welcher z.B. das zweite Ende 7 des Rohrelements 2 ausbildet. Erster und zweiter Rohrabschnitt 8, 9 sind z.B. jeweils als Rohrstück ausgebildet, z.B. als Hohlrohr mit einem durchströmbaren Innenhohlraum. Die Rohrabschnitte 8, 9 sind z.B. aus SiMo-Guß gefertigt. Die Rohrabschnitte 8, 9 weisen z.B. im Wesentlichen runden Querschnitt auf, können jedoch auch eine Geometrie aufweisen, die auf den Einbauraum oder die vorgesehene Anordnung der Abgasturbolader an der Rohranordnung 1 abgestimmt ist. Die Rohrstücke bzw. Rohrabschnitte 8, 9 können im Wesentlichen jeweils gerade oder gekrümmt sein etc.

Zur Bildung des Rohrelements 2 der Rohranordnung 1 können der erste 8 und der zweite 9 Rohrabschnitt miteinander verbunden werden oder mit weiteren Rohrabschnitten zu einem Rohrelement 2 verbunden werden. Zur Verbindung kann z.B. ein Verbindungselement vorgesehen sein, z.B. ein integral an einem Rohrabschnitt 8 bzw. 9 angeformtes Verbindungselement oder ein eigenständiges Verbindungselement, etc. Das Verbindungselement ist z.B. zwischen erstem 8 und zweitem 9 Rohrelement angeordnet. Es ist daneben denkbar, das Rohrelement 2 einstückig mit erstem 8 und zweitem 9 Rohrabschnitt auszubilden, derart, dass erster und zweiter Rohrabschnitt integral miteinander verbunden sind. Dabei kann z.B. von formschlüssigen Verbindungsverfahren Gebrauch gemacht werden.

Das Rohrelement 2 weist vorliegend z.B. ein Ausgleichselement 10 auf, z.B. ein Bewegungsausgleichselement 11 zum Ausgleich von Längs- und/oder Querbewegungen, z.B. in Form eines Kompensators und/oder z.B. ein Torsionsausgleichselement 12, z.B. in Form einer V-Bandschelle zum Ausgleich von tordierenden Bewegungen (z.B. gegenläufigen Drehbewegungen von erstem 8 und zweitem 9 Rohrabschnitt) insbesondere während einer Montage. Das Ausgleichselement 10 ist vorgesehen, um die durch die Rohranordnung 1 verbundenen Abgasturbolader voneinander zu entkoppeln, insbesondere schwingungsmäßig und/oder mechanisch zu entkoppeln, insbesondere im Betriebsfall der Brennkraftmaschine.

Das Ausgleichselement 10 kann an einem Ende 5 bzw. 7 eines Rohrabschnitts 8 bzw. 9 angeordnet sein, wobei das Ausgleichselement 10 vorliegend z.B. zwischen erstem 8 und zweiten 9 Rohrabschnitt des Rohrelements 1 angeordnet ist. Das Ausgleichselement 10 in z.B. Form eines Kompensators und/oder einer V-Bandschelle verbindet z.B. den ersten Rohrabschnitt 8 und den zweiten Rohrabschnitt 9 zwischen dem ersten Ende 5 und dem zweiten Ende 7, z.B. in einem Mittenbereich des Rohrelements 2. Ein Kompensator ist dabei herkömmlicher Weise ein z.B. zylinderförmiges, flexibles Element zum Ausgleich von Bewegungen, welche z.B. infolge thermischer Beanspruchung oder durch Vibration der Rohrabschnitte 8 bzw. 9 entstehen.

Eine bekannte V-Bandschelle ist im Wesentlichen eine Bandschelle mit einem Innen-V-Profil in z.B. Form einer umlaufenden Nut, in welchem eine Rippe oder z.B. ein Ringflansch während einer Montage bis zum endgültigen Verspannen der V-Bandschelle drehbeweglich führbar angeordnet werden kann. Die V-Bandschelle kann z.B. einen Flansch des daran anzuordnenden Kompensators während einer Montage drehbeweglich fangen, und ermöglicht insofern, den ersten 8 und den zweiten 9 Rohrabschnitt relativ zueinander torsionsfrei zu montieren. Nach Verspannung der V-Bandschelle (Schließzustand) im Rahmen einer Montage kommt der V-Bandschelle z.B. nur mehr z.B. die Funktion eines Verbindungselements von erstem 8 und zweitem 9 Rohrabschnitt bzw. eines Rohrabschnitts mit dem Kompensator zu.

Zur Bildung des Rohrelements 2 wird ein Rohrabschnitt 8 bzw. 9, z.B. der zweite Rohrabschnitt 9, mit dem Bewegungsausgleichselement 11 dauerhaft verbunden. Das Bewegungsausgleichselement 11, z.B. ein Kompensator, wird z.B. mittels einer stoffschlüssigen Verbindung mit dem Rohrabschnitt 8 bzw. 9 verbunden, z.B. laserverschweißt (Bauraumreduzierung), z.B. mit einem Flansch des Rohrabschnitts 9 bzw. 8 laserverschweißt.

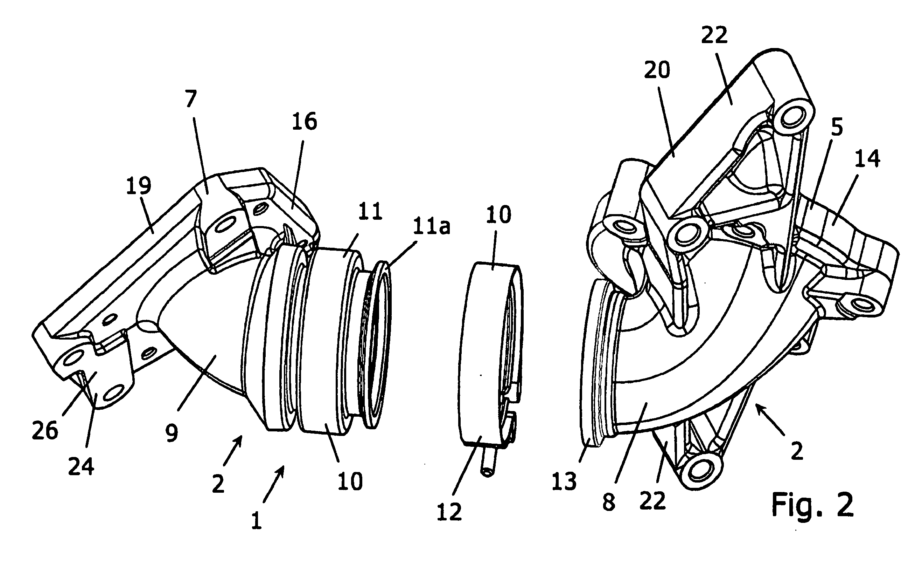

Das andere Ende des Bewegungsausgleichselements 11 wird z.B. mit dem Torsionsausgleichselement 12 verbunden. Dazu wird z.B. ein Ringflansch 11a (Fig. 2) des Bewegungsausgleichselements 11 in das Torsionsausgleichselement 12, z.B. in dessen Nutprofil, eingeführt und darin drehbeweglich gefangen. Ein Flanschelement 13 eines zu verbindenden Rohrabschnitts 8 bzw. 9, z.B. ein Ringflansch eines ersten Rohrabschnitts 8, wird z.B. ebenfalls von dem Torsionsausgleichselement 12 drehbeweglich gefangen und z.B. im Zuge einer Montage mit diesem verbunden, insbesondere z.B. starr verbunden, z.B. verschraubt oder verspannt, so dass durch den ersten Rohrabschnitt 8, das Torsionsausgleichselement 12, das Bewegungsausgleichselement 11 sowie den zweiten Rohrabschnitt 9 ein Strömungskanal für einen Abgasstrom geschaffen wird, welcher insbesondere gasdicht und durchströmbar ist.

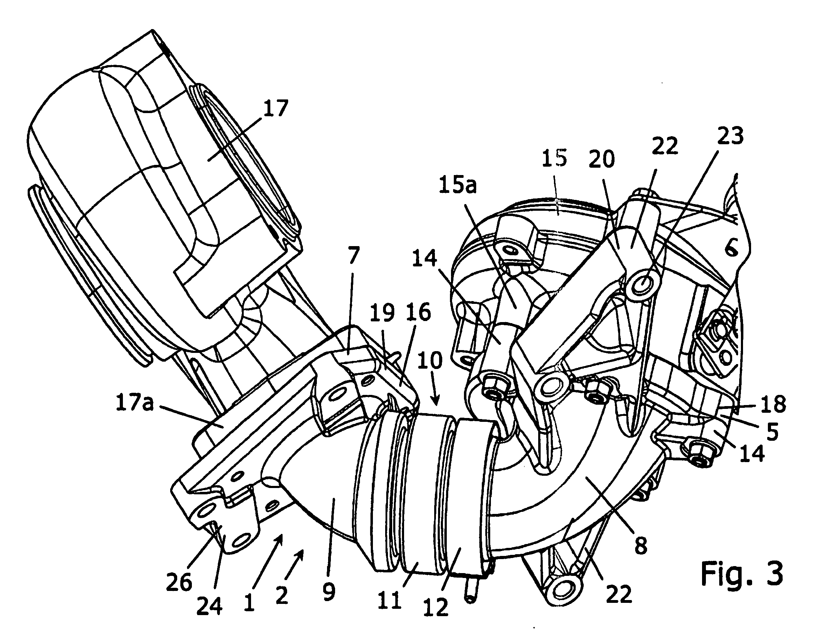

Der erste Rohrabschnitt 8 weist erfindungsgemäß eine erste Befestigungsvorrichtung 14 zur Befestigung eines ersten Abgasturboladers 15 auf (Fig. 3). Der zweite Rohrabschnitt 9 weist erfindungsgemäß eine Befestigungsvorrichtung 16 (dritte Befestigungsvorrichtung) zur Befestigung eines zweiten Abgasturboladers 17 auf. Durch die erste Befestigungsvorrichtung 14 wird der Abgasturbolader 15 z.B. derart gehaltert, dass sich die erste Öffnung 4 und der Turbinenauslass des ersten Abgasturboladers 15 gegenüberliegen. Durch die dritte Befestigungsvorrichtung 16 wird der zweite Abgasturbolader 17 gleichartig gehaltert, derart, dass sich die zweite Öffnung 6 und der Turbineneinlass des zweiten Abgasturboladers gegenüberliegen. Die Befestigungsvorrichtung 14 bzw. 16 kann dabei in Form jeweils eines Flanschelements 18 bzw. 19 ausgebildet sein, welches z.B. mit einem korrespondierenden Befestigungselement 15a und/oder einem Flanschelement 17a oder einer sonstigen Befestigungsvorrichtung eines Abgasturboladers 15 bzw. 17 bei einer Befestigung zusammenwirkt. Die Befestigungsvorrichtung 14 bzw. 16 kann jeweils auch in Form eines Vorsprungs, z.B. über den Durchmesser des Rohrelements 2 hinausragend, ausgebildet sein, oder in anderer Weise zur Befestigung an einem Abgasturbolader gebildet sein.

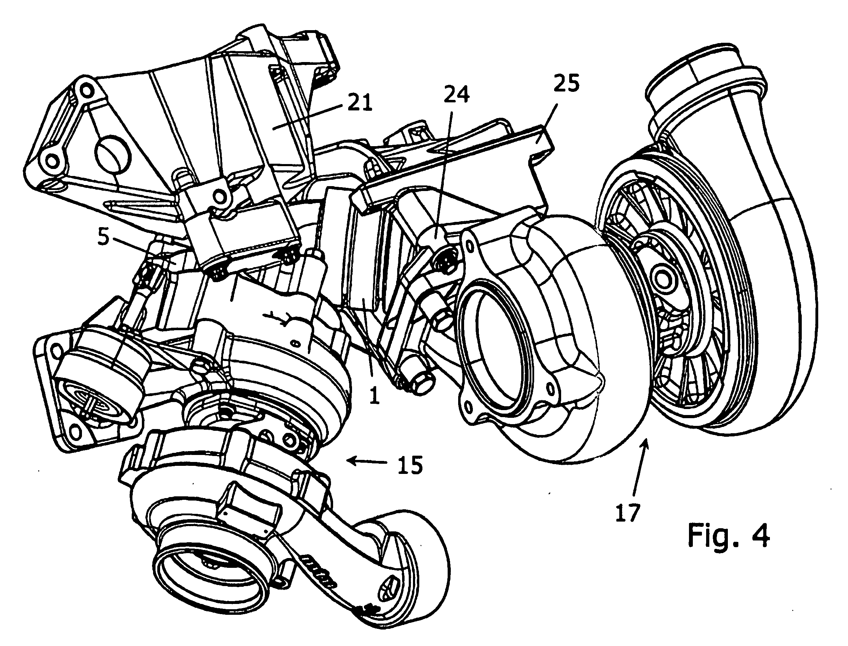

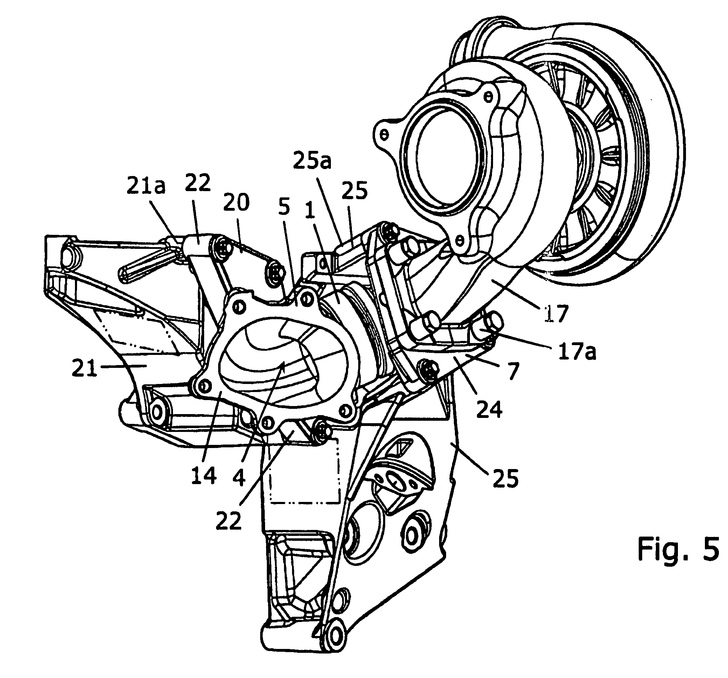

Weiterhin weist der erste Rohrabschnitt 8 z.B. eine Befestigungsvorrichtung 20 (zweite Befestigungsvorrichtung) auf, welche zur Befestigung des Rohrabschnitts 8 an einem ersten Tragelement 21 (Figs. 4, 5) der Brennkraftmaschine vorgesehen ist. Die zweite Befestigungsvorrichtung 20 ist zum Beispiel integral mit dem ersten Rohrabschnitt 8 gebildet, z.B. in Form eines Vorsprungs 22, z.B. eines dreieckförmigen Vorsprungs oder z.B. mehrerer Vorsprünge 22, welcher z.B. eine Durchgangsöffnung 23 zur Verschraubung aufweist. Die zweite Befestigungsvorrichtung 20 korrespondiert insbesondere mit einer Befestigungsvorrichtung 21a des Tragelements 21. Die zweite Befestigungsvorrichtung 20 kann ferner als Flanschelement ausgebildet sein oder in anderer, zur Befestigung an dem Tragelement 21 geeigneten Weise.

Das erste Tragelement 21 ist vorliegend zum Beispiel ein Haltelement in z.B. Form eines Adapters mit Tragfunktion, z.B. auch ein mehrteiliges Hattelement, welches mit z.B. dem Zylinderkopf der Brennkraftmaschine verbindbar ist und z.B. eine Anordnung aus Rohranordnung 2 und Abgasturboladern 15, 17 an einer gewünschten Position der Brennkraftmaschine haltert bzw. trägt. Das erste Tragelement 21 kann z.B. auch integral mit der Brennkraftmaschine gebildet sein.

Der zweite Rohrabschnitt 9 weist eine Befestigungsvorrichtung 24 (vierte Befestigungsvorrichtung) auf, welche zur Befestigung des zweiten Rohrabschnitts 9 des Rohrelements 1 an einem zweiten Tragelement 25 der Brennkraftmaschine vorgesehen ist, z.B. einem Halter oder einem Halteelement. Die vierte Befestigungsvorrichtung 24 ist zum Beispiel als Flanschelement 26 an dem zweiten Rohrabschnitt 9 gebildet, z.B. gemeinsam mit der zweiten Befestigungsvorrichtung 16 in Form des Flanschelements 19. Die vierte Befestigungsvorrichtung 26 kann auch unabhängig von der zweiten Befestigungsvorrichtung 16 gebildet sein oder anderweitig gebildet sein, z.B. als vorspringendes Element oder in anderer zur Befestigung an dem zweiten Tragelement 25 geeigneter Weise. Die vierte Befestigungsvorrichtung 24 weist z.B. Bohrungen in dem Flanschelement 26 auf, ist z.B. zur Verschraubung mit einer korrespondierenden Befestigungsvorrichtung 25a an dem zweiten Tragelement 25 vorgesehen, wobei die vierte bzw. sämtliche oben erwähnten Befestigungsvorrichtungen 14, 16, 20 auch zur anderweitigen Befestigung ausgebildet sein können, z.B. mittels bekannter form-, kraft- oder stoffschlüssiger Verfahren.

Die Befestigungsvorrichtungen 14, 16, 20, 24 können erfindungsgemäß so ausgebildet sein, dass z.B. eine Verschraubung außerhalb eines den Abgasstrom führenden Bereichs liegt, so dass eine thermische Entkopplung erzielt werden kann. Die ersten und dritten Befestigungsvorrichtungen 14, 16 sind insbesondere dazu ausgebildet, jeweils einen Abgasturbolader 15 bzw. 17 tragend zu haltern, die zweiten 20 und vierten 24 Befestigungsvorrichtungen sind insbesondere dazu ausgebildet, jeweils einen Rohrabschnitt 8 bzw. 9 tragend, z.B. an einem Tragelement 21 bzw. 25, zu haltern.

Das zweite Tragelement 25 ist z.B. integral mit der Brennkraftmaschine gebildet oder z.B. als separates und zur Verbindung mit der Brennkraftmaschine vorgesehenes Tragelement gebildet, kann darüber hinaus einteilig oder mehrteilig gebildet sein. Das Tragelement 25 kann als Adapter z.B. wie oben erläutert ausgebildet sein. Vorliegend ist das zweite Tragelement 25 z.B. zur Verbindung mit einem Kurbelgehäuse der Brennkraftmaschine ausgebildet bzw. vorgesehen und z.B. zweiteilig gebildet. Erstes 21 und zweites 25 Tragelement tragen z.B. die Anordnung aus erstem 15 und zweitem 17 Abgasturbolader und Rohranordnung 1 an der Brennkraftmaschine und haltern diese positionstreu.

Bei der Bildung einer erfindungsgemäßen Brennkraftmaschine wird zunächst z.B. die Rohranordnung 1 an der Brennkraftmaschine dauerhaft angeordnet bzw. befestigt. Dazu wird z.B. die zweite Befestigungsvorrichtung 20 mit dem ersten Tragelement 21, welches an der Brennkraftmaschine angeordnet ist, verbunden, z.B. verschraubt. Die vierte Befestigungsvorrichtung 24 wird mit dem zweiten Tragelement 25 verbunden, z.B. ebenfalls verschraubt. Das erste 21 und das zweite 25 Tragelement sind dabei vorzugsweise nicht integral gebildet, so dass sich eine Entkopplung der daran anzuordnenden Rohrabschnitte 8, 9 z.B. im Falle unterschiedlicher Anbauorte von erstem 21 und zweitem 25 Tragelement an der Brennkraftmaschine erreichen lässt.

An der wie oben erläutert mit der Brennkraftmaschine verbundenen Rohranordnung 1 wird der erste Abgasturbolader 15 mittels der korrespondierenden Befestigungsvorrichtungen 14, 15a am ersten Rohrabschnitt 8 dauerhaft angeordnet, z.B. verschraubt. Der zweite Abgasturbolader 17 wird mittels der korrespondierenden Befestigungsvorrichtungen 16, 17a am zweiten Rohrabschnitt 9 der Rohranordnung 1 ebenfalls dauerhaft angeordnet, z.B. ebenfalls verschraubt. Somit wird eine Anordnung geschaffen, bei welcher die Abgasturbolader 15, 17 von der Rohranordnung 1 getragen werden, z.B. einzig von der Rohranordnung getragen werden. Die Rohranordnung 1 wird dabei mittels der zweiten 20 und vierten 24 Befestigungsvorrichtung von dem ersten 21 und zweiten 25 Tragelement getragen, welche an der Brennkraftmaschine angeordnet sind.

## Patentansprüche

1. Abgasturboladeranordnung mit einem ersten (15) und einem zweiten Abgasturbolader (17), wobei der Turbinenauslass des einen Abgasturboladers (15) über eine Rohranordnung (1) mit einem Rohrelement (2) mit dem Turbineneinlass des anderen Abgasturboladers (17) verbunden ist, wobei ein erster Rohrabschnitt (8) des Rohrelements (2) eine erste Befestigungsvorrichtung (14) zur Befestigung des ersten Abgasturboladers (15) sowie eine zweite Befestigungsvorrichtung (20) zur Befestigung des Rohrelements (2) an einem ersten Tragelement (21) einer Brennkraftmaschine aufweist, und dass ein zweiter, zum ersten Rohrabschnitt (8) separater Rohrabschnitt (9) eine dritte Befestigungsvorrichtung (16) zur Befestigung des zweiten Abgasturboladers (17) sowie eine vierte Befestigungsvorrichtung (24) zur Befestigung des Rohrelements (2) an einem zweiten Tragelement (25) einer Brennkraftmaschine aufweist.

2. Abgasturboladeranordnung nach Anspruch 1, **dadurch gekennzeichnet, dass** das Rohrelement (2) ein Ausgleichselement (10) und/oder ein Verbindungselement aufweist.

3. Abgasturboladeranordnung nach einem der vorhergehenden Ansprüche, **dadurch gekennzeichnet, dass** eine Befestigungsvorrichtung (14, 16, 20, 24) des Rohrelements (2) ein Flanschelement (18, 19, 26) aufweist.

4. Abgasturboladeranordnung nach einem der vorhergehenden Ansprüche, **dadurch gekennzeichnet, dass** die erste (14) und die zweite (20) Befestigungsvorrichtung und/oder die dritte (16) und die vierte (24) Befestigungsvorrichtung jeweils als gemeinsame Befestigungsvorrichtung für sowohl einen Abgasturbolader (15, 17) als auch für ein Tragelement (21, 25) ausgebildet sind.

5. Abgasturboladeranordnung nach einem der vorhergehenden Ansprüche, **dadurch gekennzeichnet, dass** sich eine Befestigungsvorrichtung (14, 16, 20, 24) über einen Durchmesser des Rohrelements (2) hinaus erstreckt.

6. Brennkraftmaschine mit einer Abgasturboladeranordnung nach einem der Ansprüche 1 bis5.

7. Brennkraftmaschine nach Anspruch 6, **dadurch gekennzeichnet, dass** die tragende Befestigung mittels der Rohranordnung (1) die einzige tragende Befestigung der ersten (15) und zweiten (17) Abgasturbolader an der Brennkraftmaschine ist.

8. Brennkraftmaschine nach einem der Ansprüche 6 bis 7, **dadurch gekennzeichnet, dass** der erste Rohrabschnitt (8) des Rohrelements (2) der Rohranordnung (1) mit einem ersten Tragelement (21) verbunden ist und der zweite Rohrabschnitt (9) des Rohrelements (2) mit einem zweiten Tragelement (25) verbunden ist.

9. Brennkraftmaschine nach einem der Ansprüche 6 bis 8, **dadurch gekennzeichnet, dass** das erste Tragelement (21) mit einem Zylinderkopfelement der Brennkraftmaschine verbunden ist und/oder das zweite Tragelement (25) mit einem Kurbelgehäuse der Brennkraftmaschine verbunden ist.

10. Verfahren zur Herstellung einer Brennkraftmaschine nach einem der Ansprüche 6 bis 9, **dadurch gekennzeichnet, dass** in einem ersten Schritt die Rohranordnung (1) nach einem der Ansprüche 1 bis 5 an dem ersten (21) und dem zweiten (25) Tragelement der Brennkraftmaschine angeordnet wird, und in einem zweiten Schritt der erste (15) und der zweite (17) Abgasturbolader strömungsmäßig mit der Rohranordnung (1) verbunden an der Rohranordnung (1) tragend befestigt werden.

## Claims

1. Exhaust-gas turbocharger arrangement having a first (15) and a second exhaust-gas turbocharger (17), the turbine outlet of one exhaust-gas turbocharger (15) being connected via a pipe arrangement (1) with a pipe element (2) to the turbine inlet of the other exhaust-gas turbocharger (17), a first pipe section (8) of the pipe element (2) having a first fastening apparatus (14) for fastening the first exhaust-gas turbocharger (15) and a second fastening apparatus (20) for fastening the pipe element (2) to a first supporting element (21) of an internal combustion engine, and in that a second pipe section (9) which is separate from the first pipe section (8) has a third fastening apparatus (16) for fastening of the second exhaust-gas turbocharger (17) and a fourth fastening apparatus (24) for fastening the pipe element (2) to a second supporting element (25) of an internal combustion engine.

2. Exhaust-gas turbocharger arrangement according to Claim 1, **characterized in that** the pipe element (2) has a compensation element (10) and/or a connecting element.

3. Exhaust-gas turbocharger arrangement according to either of the preceding claims, **characterized in that** a fastening apparatus (14, 16, 20, 24) of the pipe element (2) has a flange element (18, 19, 26).

4. Exhaust-gas turbocharger arrangement according to one of the preceding claims, **characterized in that** the first (14) and the second (20) fastening apparatus and/or the third (16) and the fourth (24) fastening apparatus are configured in each case as a common fastening apparatus for both an exhaust-gas turbocharger (15, 17) and for a supporting element (21, 25).

5. Exhaust-gas turbocharger arrangement according to one of the preceding claims, **characterized in that** a fastening apparatus (14, 16, 20, 24) extends beyond a diameter of the pipe element (2).

6. Internal combustion engine having an exhaust-gas turbocharger arrangement according to one of Claims 1 to 5.

7. Internal combustion engine according to Claim 6, **characterized in that** the supporting fastening by means of the pipe arrangement (1) is the only supporting fastening of the first (15) and second (17) exhaust-gas turbocharger to the internal combustion engine.

8. Internal combustion engine according to either of Claims 6 and 7, **characterized in that** the first pipe section (8) of the pipe element (2) of the pipe arrangement (1) is connected to a first supporting element (21) and the second pipe section (9) of the pipe element (2) is connected to a second supporting element (25).

9. Internal combustion engine according to one of Claims 6 to 8, **characterized in that** the first supporting element (21) is connected to a cylinder head element of the internal combustion engine and/or the second supporting element (25) is connected to a crankcase of the internal combustion engine.

10. Method for producing an internal combustion engine according to one of Claims 6 to 9, **characterized in that**, in a first step, the pipe arrangement (1) according to one of Claims 1 to 5 is arranged on the first (21) and the second (25) supporting element of the internal combustion engine, and, in a second step, the first (15) and the second (17) exhaust-gas turbocharger are fastened in a supporting manner to the pipe arrangement (1) such that they are connected in terms of flow to the pipe arrangement (1).

## Revendications

1. Agencement de turbocompresseurs à gaz d'échappement avec un premier (15) et un deuxième (17) turbocompresseurs à gaz d'échappement, dans lequel la sortie de turbine d'un premier turbocompresseur à gaz d'échappement (15) est reliée par un agencement de tubes (1) avec un élément tubulaire (2) à l'entrée de turbine de l'autre turbocompresseur à gaz d'échappement (17), dans lequel une première section tubulaire (8) de l'élément tubulaire (2) présente un premier dispositif de fixation (14) pour la fixation du premier turbocompresseur à gaz d'échappement (15) ainsi qu'un deuxième dispositif de fixation (20) pour la fixation de l'élément tubulaire (2) à un premier élément de support (21) d'un moteur à combustion interne, et en ce qu'une deuxième section tubulaire (9), séparée de la première section tubulaire (8), présente un troisième dispositif de fixation (16) pour la fixation du deuxième turbocompresseur à gaz d'échappement (17) ainsi qu'un quatrième dispositif de fixation (24) pour la fixation de l'élément tubulaire (2) à un deuxième élément de support (25) d'un moteur à combustion interne.

2. Agencement de turbocompresseurs à gaz d'échappement selon la revendication 1, **caractérisé en ce que** l'élément tubulaire (2) présente un élément de compensation (10) et/ou un élément de liaison.

3. Agencement de turbocompresseurs à gaz d'échappement selon l'une quelconque des revendications précédentes, **caractérisé en ce qu'**un dispositif de fixation (14, 16, 20, 24) de l'élément tubulaire (2) présente un élément de bride (18, 19, 26).

4. Agencement de turbocompresseurs à gaz d'échappement selon l'une quelconque des revendications précédentes, **caractérisé en ce que** le premier (14) et le deuxième (20) dispositifs de fixation et/ou le troisième (16) et le quatrième (24) éléments de fixation sont respectivement réalisés en tant que dispositif de fixation commun pour aussi bien un turbocompresseur à gaz d'échappement (15, 17) que pour un élément de support (21, 25).

5. Agencement de turbocompresseurs à gaz d'échappement selon l'une quelconque des revendications précédentes, **caractérisé en ce qu'**un dispositif de fixation (14, 16, 20, 24) s'étend au-delà d'un diamètre de l'élément tubulaire (2).

6. Moteur à combustion interne avec un agencement de turbocompresseurs à gaz d'échappement selon l'une quelconque des revendications 1 à 5.

7. Moteur à combustion interne selon la revendication 6, **caractérisé en ce que** la fixation portante au moyen de l'agencement de tubes (1) est la seule fixation portante du premier (15) et du deuxième (17) turbocompresseurs à gaz d'échappement au moteur à combustion interne.

8. Moteur à combustion interne selon l'une des revendications 6 à 7, **caractérisé en ce que** la première section tubulaire (8) de l'élément tubulaire (2) de l'agencement de tubes (1) est reliée à un premier élément de support (21) et la deuxième section tubulaire (9) de l'élément tubulaire (2) est reliée à un deuxième élément de support (25).

9. Moteur à combustion interne selon l'une quelconque des revendications 6 à 8, **caractérisé en ce que** le premier élément de support (21) est relié à un élément de culasse du moteur à combustion interne et/ou le deuxième élément de support (25) est relié à un carter de vilebrequin du moteur à combustion interne.

10. Procédé de fabrication d'un moteur à combustion interne selon l'une quelconque des revendications 6 à 9, **caractérisé en ce que** dans une première étape on dispose l'agencement de tubes (1) selon l'une quelconque des revendications 1 à 5 sur le premier (21) et sur le deuxième (25) éléments de support du moteur à combustion interne, et dans une deuxième étape on fixe de façon portante à l'agencement de tubes (1) le premier (15) et le deuxième (17) turbocompresseurs à gaz d'échappement assemblés à l'agencement de tubes (1) suivant l'écoulement.
